# EUROPEAN PATENT APPLICATION

(11) **EP 1 328 103 A2**
(43) Date of publication of application: **16.07.2003**
(21) Application number: 03000021.0
(22) Date of filing: 03.01.2003
(51) Int. Cl.: H04L 29/06

(54) **Method and system for identifying users and authenticating digital documents on data communications networks**

(30) Priority: 10.01.2002 IT MO20020006
(71) Applicant: Dream Team S.r.l., 56125 Pisa (IT)
(72) Inventor: Buoncristiani, Luigi, 56124 Pisa (IT); Aquilino, Domenico, 56124 Pisa (IT)
(74) Representative: Modiano, Guido, Dr.-Ing.

(57) **Abstract**

A system for certifying documents transmitted digitally over a data communications network, such as financial transactions, registry office certificates and payments, comprising clients (20) for accessing services provided by the various providers and a centralized system (10) for assigning digital certificates and for verifying digital signatures applied by users of the system, each signing device (40) being uniquely associated with a user independently of the service required, thus allowing the user to access a plurality of services by a single security instrument.

## Description

The present invention relates to the field of services for identification and authentication on data communications networks, with particular reference to the field of digital signatures.

During the last decade, data communications networks in general and the Internet in particular have gradually become widespread. This ongoing expansion is accompanied by the proliferation of new online serves, which over time gain the trust of consumers and become part of the daily activity pattern of the average user.

Online services range from the possibility to access remote information resources, such as libraries, journalistic archives, historical archives, music archives and the like, to the possibility to make purchases and commercial transactions directly from home, to check one's bank accounts and perform stock-market transactions without moving from one's work station.

Most public organizations, such as city councils, hospitals, registry offices, vehicle registration authorities, are increasingly orientated toward the use of data communications networks, with a consequent reduction of times and running costs.

One of the biggest problems observed in using these services is the need to certify the identity of the parties that interact by means of the data communications network and the content of the documents transmitted between the customer of the service and the provider of the service.

The type of services offered in fact requires the user to be identified assuredly before he can use the requested service.

The most widely used identification method is the user's entry of a login, or user identifier, and of a password or secret code. The entry of this data pair is still used today in many cases to identify the user who is connecting to the server of the system operated by the service provider.

The large number of services already available has recently called attention to a logistical problem that is strongly felt in the field: the need to remember an increasingly large number of identification data, typically logins and passwords.

Moreover, this system, if used without further measures, is not even a sufficiently secure method, since often it is or can be bypassed by ill-intentioned experts in the field.

The need for greater security, arising most of all from the fact that many services comprise commercial transactions (purchases, online trading, and so forth) has brought to the forefront new protection methods, such as digital signatures and certificates and smart cards with their readers, mechanisms for the authentication of electronic documents that have been introduced recently indeed to cope with the new requirements of the modern market.

A digital signature can be seen as the online equivalent of the conventional signature on paper. By way of the statutory provisions that are in force in several states, including the Italian State, the digital signature is legally valid and has the same value as an autograph signature.

The digital signature process is based on an infrastructure known as PKI (Public Key Infrastructure) and on known asymmetric cryptography techniques. Every party that has a digital signature certificate is given a pair of keys: a "public" key, which can be freely queried and distributed to the public, and a "private" key, which must remain secret and is stored in a signing device, which is usually a smart cart protected by an access PIN (Personal Identification Code).

The digital signature is used for two different purposes: ensuring the integrity of a message and authenticating the identity of the sender.

The sender, using his private key, signs the message so that the signature can be verified by anyone by using the sender's public key, after verifying the validity of the public key at a Certification Authority. This verification occurs by means of the digital certificate, which is a signed electronic document issued by the Certification Authority. The digital certificate is usually attached to each electronic message sent by the sender to the recipient, and is used mainly to establish the relationship between a name and a public key, so as to ensure the identity of the signer and give the recipient the means to encrypt a reply.

Although on the one hand, from the point of view of service providers, the level of security can be considered to have improved considerably with respect to what was available a few years ago, the same cannot be said for the user or customer side, which has to interact with increasingly varied and complex infrastructures, a plurality of signing devices and cards to be kept in one's pocket or wallet, each of which can be activated by means of a different PIN or password, with consequent difficulty in memorization and awkwardness in use.

The situation in this regard can only worsen in the future, with the introduction of electronic identity cards, smart cards of the Chamber of Commerce, ATM cards, credit cards, club cards, and so forth.

Each one of these cards, in order to allow access to the corresponding online service, must ask the user for its individual identifier and be accompanied by its individual signing device, such as a reader and a keypad for entering a code, which is interposed between the network client, i.e., the station from which the service is requested, and the corresponding server of the provider, in order to request and obtain authorization for the service.

This is only an example of interposition of the signing device between the request of a service and the service itself. The same occurs, in different manners, depending on the type of station used by the user to request the service. For example, if the Internet is used, in some cases a screen is displayed within the user's browser, and the user can enter his login and password, which vary for each service, in the screen; in other cases, the digital certificates installed in the browser itself are used automatically. As an alternative, proxy applications are used which filter all the requests and intercept the ones that must be signed, furthermore forcing the user to work necessarily from his own station.

The current background art proposes, as a solution to the above mentioned problem, the centralization of the data required to access the services on a single card, for example a programmable Java card, which ensures isolation of the application inside it. Such a solution, however, has been found to be unsatisfactory for several reasons. In particular, the production costs are borne by the organization that dispenses the first service to which the user subscribes: the organization must bear the costs for the physical production of the card, which is then also used by other organizations for various services; moreover, the memory of the card is limited and therefore can support a finite number of services; finally, the need remains to physically interpose a different signature instrument between the client and the server depending on the service that is required.

The aim of the present invention is to overcome the problems noted above, by providing a new method and system for authenticating users on request that does not require the interposition and use of a different signing device for each service requested by the user.

Within this aim, an object of the present invention is to centralize the identification and authentication system and unify or minimize the signature instrument, customizing it on the user and not on the service requested by the user.

Another object of the present invention is to relieve the user from the burden of memorizing a large number of keywords or secret codes, which cannot be kept in writing or electronically for security reasons.

This aim and these and other objects that will become better apparent hereinafter are achieved by a system for authenticating users on data communications networks, preferably but not exclusively on the Internet, comprising a plurality of signing devices and a plurality of client stations 30 from which access is gained to a plurality of servers 20 operated by a plurality of service providers, characterized in that each one of the signing devices is associated with a user and is suitable to generate a digital signature on behalf of the associated user, independently of the client station used.

This system comprises the following steps: sending to a server of a service provider, from a client station, a request to a service, the request comprising at least one identifying data item of a user; searching for the URI (Uniform Resource Identifier) of a signing device associated with the user; sending a signature request to the signing device; by means of the signing device, signing the request and sending it to the server.

Further characteristics and advantages of the invention will become better apparent from the following detailed description that follows, given by way of non-limitative example and accompanied by the associated figures, wherein:
Figure 1 is a schematic view of the system according to the invention;
Figure 2 is a flowchart for the request of signature and authentication data;
Figure 3 is a flowchart according to the inventive method on which the present invention is based;
Figures 4, 5, 6, 7 and 8 exemplify a possible implementation of messages exchanged among the parties involved in the described system for implementing the inventive concept on which the present invention is based.

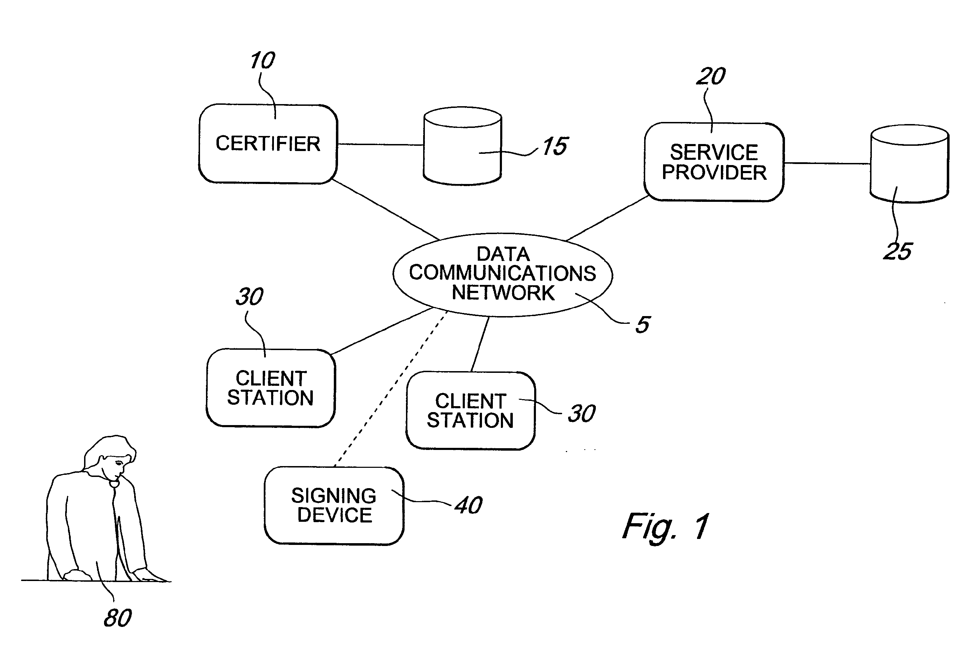

Figure 1 illustrates a preferred embodiment of the architecture of the system according to the invention. In particular, Figure 1 illustrates a centralized server 10, operated by an identification service provider, hereinafter designated as the "certifier", which is connected to a database 15 and to a data communications network 5; a server 20 of a generic service provider, which is connected to a database 25 and to the data communications network 5; two client stations 30 and a signing device 40, which are also connected to the data communications network 5, and a user 80.

The elements shown schematically in Figure 1 are illustrated by way of example and illustrate what is actually a plurality of client stations, a plurality of signing devices, a plurality of servers and corresponding archives operated by service providers and/or by the certification authority.

The operation of the system is divided into two separate steps: a first step for the registration of the user 80 at the centralized identification system 10, and a second step for actual use.

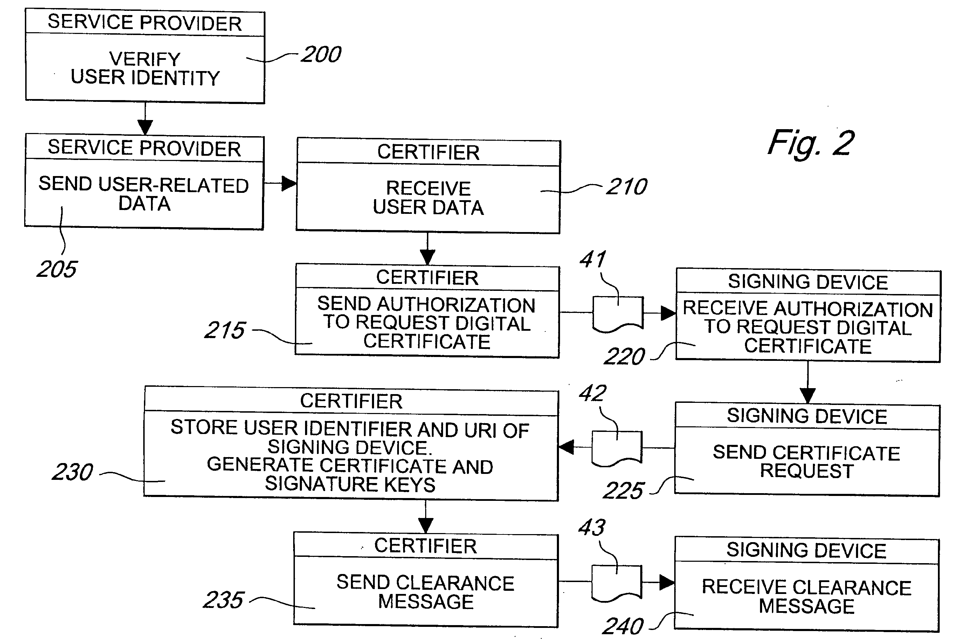

The first step, shown schematically in Figure 2, is performed only once when the user 80 needs to subscribe to any service that participates in the system according to the present invention.

The user 80 goes to an authorized service provider 20 and gives his identification data in order to obtain access to the service offered by the provider 20.

The service provider 20 physically recognizes the identity of the user 80 (step 200) and sends to the certifier 10 significant data related to the user (step 205). Upon receiving a new registration (210), the centralized server 10 sends (215) a message 41 to the signing device 40, enabling it for the request of a certificate. The signing device 40 receives (220) the authorization and sends (225) the certificate request, for example according to the PKCS10 standard, in a message 42. If it is not able to generate key pairs autonomously, at the same time it requests the server to issue the certificate, for example according to the PKCS12 standard format, which also comprises the private key.

The certifier 10 enters the new user 80 in its database 15, assigning to the user a unique identifier and generating for the user a digital certificate and, if necessary, also the pair of signing keys (step 230). Once the certificate has been generated, the certifier sends (235) a message 43 to the signing device 40, enabling it for collection.

The signing device can be any instrument, provided that it can be connected to the data communications network 5, directly or indirectly by way of suitable gateways that are already known in the field.

The device can therefore be a personal computer, preferably a portable one, a GPRS or UMTS cellular telephone, a handheld, or any other wireless or wired device, in which suitable management software is or can be loaded, said software being used to handle the messages in the cited formats and to apply the digital signature of the user 80 by using his private key.

This device is assigned a URI (Uniform Resource Identifier), which allows to identify the location of the signature instrument of the user 80 within the data communications network 5.

The URI is preferably stored both in the database 15 of the certifier 10 and in the database of the service provider 20. However, it is possible to provide for storage at only one of the two parties without thereby altering the inventive concept that is the basis of the invention, as will become better apparent hereinafter.

From this moment onward, if the user 80 wishes to access another service managed by a participating provider 20', he merely has to ask the provider 20' for an identifier that is local to the system of the provider 20' and allows to identify him among the various users.

The provider 20' then stores, within its database, the identifier as assigned by it to the user 80, as well as the URI of the signing device chosen by the user 80 to apply his digital signature.

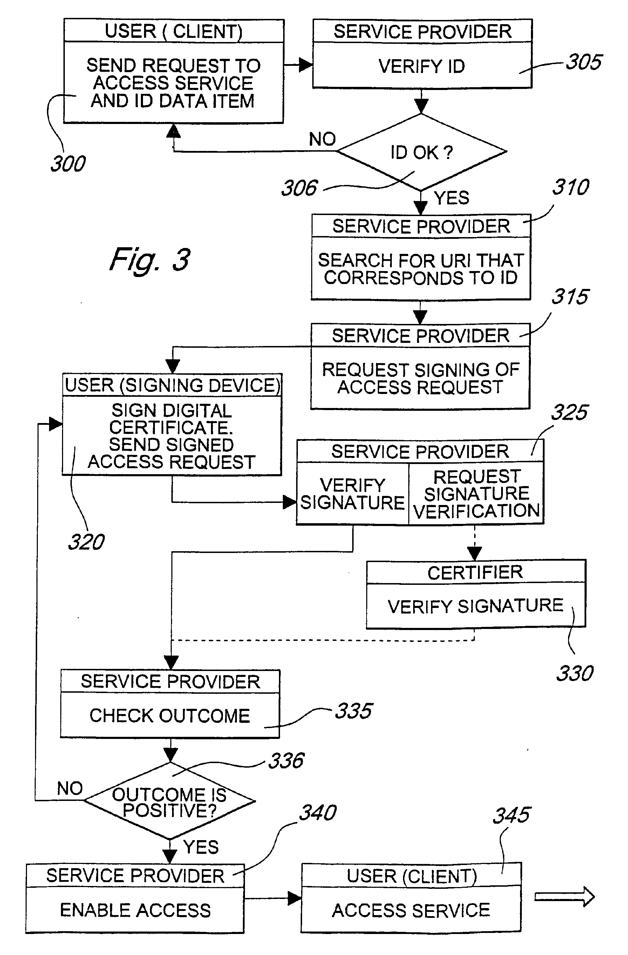

With reference to the flowchart of Figure 3, the operation of the system in the second step, i.e., when the user 80 wishes to access a service provided by a provider 20 contracted with the centralized system 10 and with which the user 80 is registered, is as follows.

The user 80 connects from a client station 30 to the server of the service provider 20, sending in a conventional manner a request to access the service. Merely by way of illustration, it is now assumed that the client station 30 has an Internet browser and that the service provider 20 is a bank that offers a home banking system.

The user 80 is connected, by means of his browser, to a site for accessing the service provided by the provider 20 and enters, for example in a field of the HTML page of the site or in a window that appears when requested by the server, his identification code for the requested service, for example his taxpayer identification code (step 300).

The server 20 of the service provider verifies (305) the received identifier, searching for it (306) in its database 25. If it is not found, the server 20 sends an error message to the browser, asking to enter a valid identifier.

If the user 80 is instead correctly registered in the database 25, the server 20 retrieves (310) the information related to the URI of the signing device 40 of the user 80, and asks the device to sign the request to access the service submitted by the browser (step 315) by means of a message 44 sent with a standard protocol, for example HTTP, or a proprietary protocol.

The device, upon receiving the message 44, displays to the user 80 the terms of the request. The user 80 then enters the code that enables the use of his private key to sign the access request (step 320), by keying it in on his own signing device 40, for example his mobile phone, his handheld or an application that runs on the computer itself. The result 45 thus obtained is returned to the server 20 as a response to the request.

The server 20 receives the digitally signed request and verifies it locally or by sending it (325) in turn to the server 10 of the certifier.

In this last case, the certifier verifies the signature, by using the public key of the user 80, which is transmitted together with the request or is found in the database 15. The mechanism is preferably based, as currently occurs, on calculating the hash, this term being used to designate a known algorithm that calculates a "fingerprint" of the transmitted text, said hash being then compared (330) with the hash calculated and encrypted when the user 80 sent the request.

If the comparison between the calculated hash and the transmitted hash produces identical results, the centralized identification server 10 returns a positive response to the server 20 of the provider of the home banking service. Otherwise, the returned response corresponds to an error indication.

The server 20 of the service provider checks the received response (335) and evaluates its outcome (336). If it is positive, it enables (340) the access to the client 30 of the user 80, who at this point can perform the requested operation (345), since it is certified that this operation is correctly authorized.

Clearly, the user 80 is not constrained to using a single client station. On the contrary, the inventive concept on which the present invention is based finds its maximum expression in the possibility of the user 80 to use an unlimited number of services, without altering the possibility to have a single digital signature instrument.

For example, the user 80 can now go to the automatic counter 30" of the city council to request a family status certificate. The server 20" of the registry office requests on-screen the entry of an identification data item, for example the taxpayer identification code, checks whether it exists in its database 25", retrieves the URI of the corresponding signing device 40, and sends to the signing device 40 the request to sign the service access request.

Once again, the user 80 must enter on his signing device the code for activating the hash calculation algorithm and for sending the digitally signed request to the server 20".

As in the previously described case, the server 20" sends the received data to the server 10 of the centralized identification system and satisfies the requests of the user 80 if the outcome of the checking operations is satisfactory.

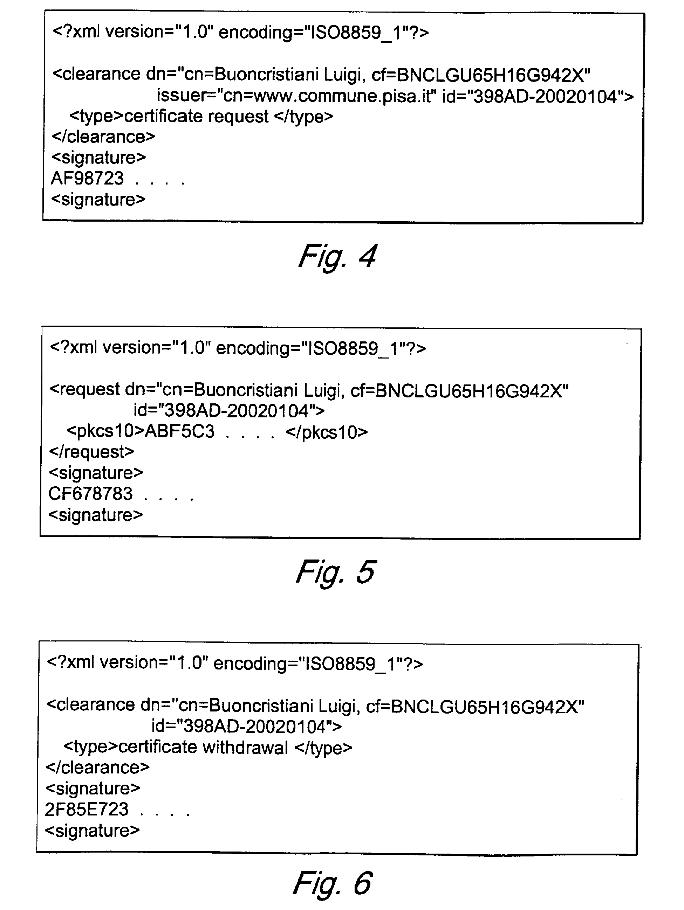

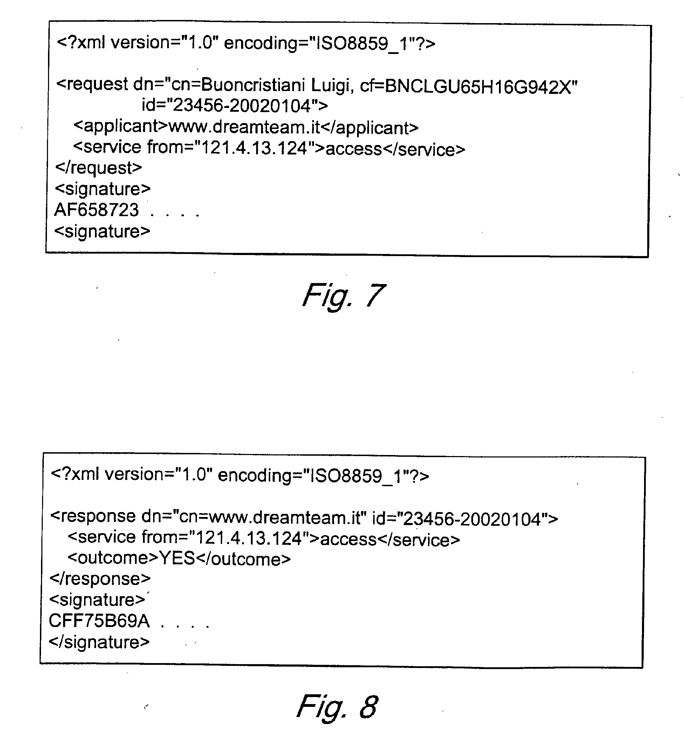

Figures 4, 5, 6, 7 and 8 illustrate an exemplifying and non-limitative implementation, in the XML language, of the messages 41, 42, 43, 44 and 45 respectively, which illustrates in practice the flow of information among the parties involved in the system.

It has thus been shown that the present method and system achieve the intended aim and objects. In particular, it has been shown that the signing device thus conceived allows to centralize the operations for verifying the identity of users and for authenticating transmitted documents independently of the service that is requested, with a considerable saving of resources. Moreover , the system thus conceived, by allowing the uncoupling between the client station and the signing device, allows to use data communications technology in manners that currently can be used only through conventional methods. For example, a securities investment company or a financial broker can operate on behalf of a user, buying or selling shares from their work station, while the authorization signature is input simultaneously by the user himself, wherever he may be. Likewise, it is possible to perform secretarial work, which then requires the signature of the person responsible, without requiring the physical presence of the user at the station where the secretarial staff works, since the authorization to proceed is obtained only after the entry of the digital signature on the part of the signing device controlled by the user 80.

The many problems of delegating to work on behalf of third parties, for example in requesting certificates or in collecting postal material, are thus solved, since the validity of the signature applied by the user is independent of who is physically acting on his behalf.

Clearly, numerous modifications are evident and can be promptly applied by the person skilled in the art without abandoning the scope of the protection of the present invention. For example, it is obvious for the person skilled in the art to acquire the information related to the URI of a signing device in any location accessible by way of the data communications network 5, for example by using a centralized system for URI resolution, and it is likewise evident that communication among the described parties can also occur by using a plurality of data communications networks, for example by using portions of private networks in some of the described steps.

It is also evident that the inventive concept on which the present invention is based is independent of the physical location and of the manner in which the user identification data are processed; said location and manner can be different from the cited mechanism for pairing user identifier/URI of the signing device.

Therefore, the scope of the protection of the claims must not be limited by the illustrations or by the preferred embodiments shown in the description as examples, but rather the claims must comprise all the characteristics of patentable novelty that reside in the present invention, including all the characteristics that would be treated as equivalent by the person skilled in the art.

The disclosures in Italian Patent Application No. MO2002A000006 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system for authenticating users on data communications networks, comprising a plurality of signing devices and a plurality of client stations from which access is gained to a plurality of servers operated by a plurality of service providers, **characterized in that** each one of said signing devices is associated with a user and is suitable to digitally sign on behalf of the associated user, independently of the client station used.

2. The system according to claim 1, **characterized in that** said data communications network is the Internet.

3. The system according to claim 1, **characterized in that** each one of said plurality of signing devices is associated with a unique URI (Uniform Resource Identifier).

4. The system according to claim 3, **characterized in that** said signing device is chosen from the group that comprises:
-- a GPRS cellular telephone;
-- a UMTS cellular telephone;
-- a handheld;
-- a personal computer.

5. The system according to claim 1, further comprising a centralized server for issuing digital certificates.

6. A signing device for authenticating a user on data communications networks, comprising means for applying a digital signature upon request of a server of a service provider made from a client station, **characterized in that** said signing device is associated with a user and is suitable to digitally sign on behalf of the associated user, independently of the client station that is used.

7. The signing device according to claim 6, **characterized in that** it is identified on said data communications network by means of a URI associated therewith.

8. The signing device according to claim 7, **characterized in that** said data communications network is the Internet.

9. The device according to claim 6, **characterized in that** it is chosen from the group that comprises:
-- a GPRS cellular telephone;
-- a UMTS cellular telephone;
-- a handheld;
-- a personal computer.

10. A method for authenticating users on data communications networks, comprising the steps of:
-- from a client station, sending to a server of a service provider a request to access a service, said request comprising at least one identification data item of a user;
-- searching for a URI (Uniform Resource Identifier) of a signing device associated with said user;
-- sending a signature request to said signing device;
-- by way of said signing device, generating a digital signature and sending it to said server; **characterized in that** said signing device is uniquely associated with said user and can be operated by said user independently of the client station used.

11. The method according to claim 10, **characterized in that** said data communications network is the Internet.

12. The method according to claim 10, **characterized in that** said signing device is chosen from the group that comprises:
-- a GPRS cellular telephone;
-- a UMTS cellular telephone;
-- a handheld;
-- a personal computer.
